# EUROPEAN PATENT APPLICATION

(11) **EP 4 198 106 A1**
(43) Date of publication of application: **21.06.2023**
(21) Application number: 21215818.2
(22) Date of filing: 20.12.2021
(51) Int. Cl.: C09K 11/88, C09K 11/56, C09K 11/02

(54) **QUANTUM DOT, METHOD OF ITS PRODUCTION AND APPLICATIONS**

(71) Applicant: Fraunhofer-Gesellschaft zur Förderung der angewandten Forschung e.V., 80686 München (DE)
(72) Inventor: Hyung Seok, Choi, Golm (DE); Jiyong, Kim, Golm (DE); Wedel, Armin, Golm (DE)
(74) Representative: Pfenning, Meinig & Partner mbB

(57) **Abstract**

Quantum dot with a core-shell structure, comprising a core and at least one shell surrounding the core, characterized in that the core comprises or consists of a Zn-Se-Te-X semiconductor material, wherein X denotes CI, Br, I or a combination thereof.

## Description

The present invention relates to a new quantum dot with a broadened Full Width at Half Maximum (FWHM), being suitable as light source for white light. The present invention also relates to a method of production of the according quantum dots as well their applications.

### Prior art

For the past decade, Non-Cd based colloidal quantum dots (QDs) materials have received a lot of attention in display field because of their bandgap engineering properties, theoretically obtainable narrow Full Width at Half Maximum (FWHM), and relatively eco-friendly character as compared to CdSe type QDs (Chemistry of Materials 28(8): 2491-2506).

Recently, significant effort has been conducted to develop highly emissive and stable white light-emitting diodes (LEDs) for the lighting and display application as demand of LED is increasing in automotive and display industry. As cost-effective solution process is applicable for the device fabrication, colloidal quantum dots (QDs) are considered as the next generation phosphor for white LED in order to replace conventional organic phosphor or to substitute the active material of white organic light emitting diodes (WOLED) (Advanced Science 6(24) 18 2019).

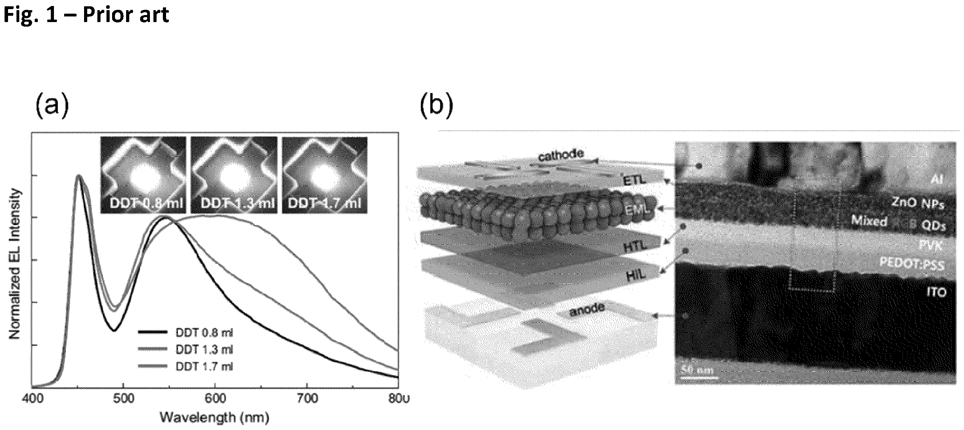

Until now, single-component white emitting non-Cd colloidal quantum dots have been barely studied, and it is challenging to realize full-range white emission with good optical properties. Therefore, in past few years, white emission with colloidal QDs have been realized with the help of another source of blue emission for PL application, or mixing up 2 or 3 different QDs for electroluminescent (EL) light emitting diode, using red, green and blue monochromic color mixed QD emissive layer as described in figure 1(a) and (b), respectively. Figure 1(a) shows a white emitting QD film with yellowish broad emission Cu-In-S/ZnS quantum dot film on the blue LED (J.Mater. Chem. C, 2016, 4, 2457), 1(b) a white emitting EL-QLED with mixing red, green blue emitting colloidal quantum dot, both known from the prior art.

Photoluminescent color conversion needs a QD dispersion in a polymer matrix on the top of the blue light source. It has the limitation that the complexity of fabrication process which requires multiple quantum dots. In addition, the self-quenching effect between two different QDs in matrix significantly restrict the conversion efficiency of the QD film. In case of the QD-EL device, the different size and band gaps of quantum dots are attributed to the different charge balance and the different life time which generates color fade away, mostly because of the high energy barrier and the inferior stability of blue QDs (Nano Letters, 7, 2196-2200, 2007). As a result, instead of using multi monochromatic QDs, single QDs which has full-covered white emitting spectrum with simple processability, high optical properties and stability is needed to satisfy the requirement of QD-WLED from display and lighting industry.

There have been efforts to synthesize single-component white emitting quantum dots for the QD-WLED application. for instance, 1) using defect emission of Ternary QDs (I-III-IV QDs, such as Cu-In-S or Ag-In-S based QDs) 2) doping metal cations in the binary QDs (e.g InP:Ag, ZnSe:Mn QDs), and 3) attaching the blue-emitting ligands on the surface of yellow emitting QDs. Despite all those previous attempts, each method have limitations.

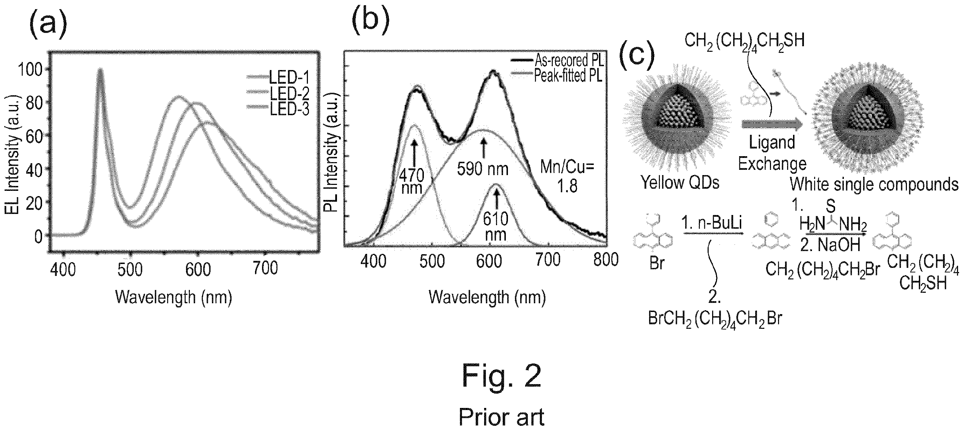

Figure 2 shows (a) EL emission of Ag-In-S QD with blue LED [ACS Appl. Mater. Interfaces 2015, 7, 27713-27719], (b) co- doped ZnSe:Mn:Cu [ACS Appl. Mater. Interfaces 2016, 8, 19, 12291-1229] and (c) Illustration of the white-lighting single QD compound through ligand exchange [J. Mater. Chem. C, 2014,2, 9800-9804] known from the prior art.

However, still unsolved problems and drawbacks exist in known quantum dots, especially the following:
(1) In case of ternary QDs, defects emission covers only from green to red region due to relatively small band gap of host material (1.5 - 1.9 eV). Additional blue light source or mixing with blue phosphor is required.
(2) So far reported white emitting binary doping QDs show relatively low quantum yield (<50%) [Chem. Mater. 2011, 23, 16, 3706-3713] or have the lack of the coverage of full white spectrum, especially due to the quenching of the host band edge emission.
(3) Ligand exchanged quantum dots limited the solvent polarity and the additional and showed lack of color tenability to achieve pure white.

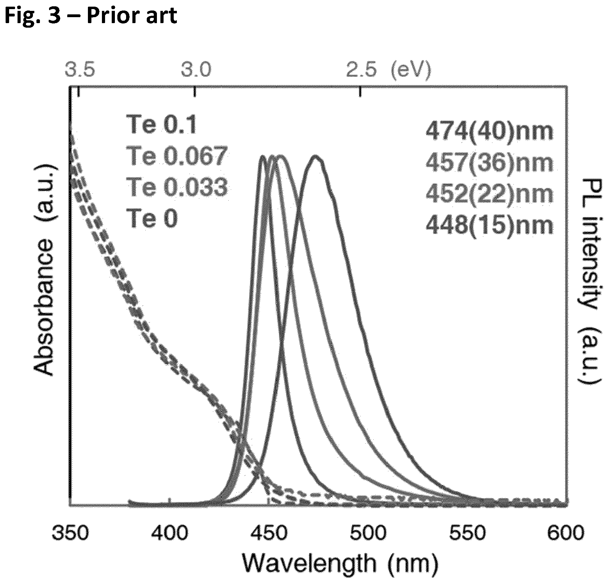

ZnSeTe QDs, considered as a reference material, have been researched intensely for blue to green emitting materials by changing the Te/Se ratio considering Tellurium alloying broadens the band gap of the host material (Nature, 586, 15, 385 (2020)). However, we suggest our new composition of Zn-Se-Te-X (X=Cl,Br,I) QDs having multi shell structure showing the controllable white emission by varying halide contents. This is new approach to utilized Zn-Se-Te based quantum dots which have been limited to blue to green emission phosphors. Figure 3 shows an emission spectrum of ZnTeSe quantum dots with different Te concentration (Nature, 586, 15, 385 (2020)).

Originally ZnSe quantum dots with Te alloying is studied for the blue to green emission (Chem. Mater. 2020, 32, 13, 5768-5775), because of the larger band gap of ZnTe (2.3 eV) than ZnSe (2.75 eV).

However, it is still challenging to achieve white emission with high quantum yield with single ZnTeSe quantum dots. Accordingly, the present invention aims to solve the aforementioned problems. Accordingly, the present invention aims to solve the aforementioned problems.

### Description of the invention

The solution to the above-mentioned problem is described in the independent claims. The dependent claims are directed to preferred embodiments of the present invention.

According to a first aspect, the present invention is directed to a quantum dot with a core-shell structure, comprising a core and at least one shell surrounding the core, wherein the core comprises or consists of a Zn-Se-Te-X semiconductor material, wherein X denotes Cl, Br, I or a combination thereof.

Surprisingly it was found by the inventors that non-Cd based Zn-Se-Te-Halide quantum dots (QD) exhibit full-covered white emission with high quantum yield, which is required in display and lighting industry. Further, a precise color turning can be achieved with the quantum dots according to the present invention, it is possible to simply tune the emission of Zn-Se-Te-Halide QDs from pure blue to green and white which allows their flexible use for a broad range of applications. In addition the production of the quantum dots according to the present invention can be easily achieved by one-pot synthesis which allows their mass production and accordingly their application on an industrial scale.

According to a preferred embodiment, in the quantum dot the Zn-Se-Te-X semiconductor material has a molar ratio of Te to Se from 0.001 to 0.150, preferably from 0.005 to 0.125, especially preferred from 0.010 to 0.100.

Furthermore, it is preferred if the Zn-Se-Te-X semiconductor material has a molar ratio of X to Se from 0.001 to 1.000, preferably from 0.005 to 0.800, especially preferred from 0.075 to 0.500.

Specifically, in the quantum dot according to the present invention the Zn-Se-Te-X semiconductor material has a molar ratio of Zn to X from 0.01 to 3.0, preferably from 0.05 to 2.0, especially preferred from 0.1 to 1.2.

Especially preferred the Zn-Se-Te-X semiconductor material is selected from the group consisting of Zn-Se-Te-Cl, Zn-Se-Te-Br, Zn-Se-Te-I or a combination thereof.

According to another preferred embodiment, the Zn-Se-Te-X semiconductor material has the following composition: Zn_{w}SeₓTe_{y}X_{z} wherein
0.2 ≤ w ≤ 0.8, preferably 0.3 ≤ w ≤ 0.7,
0.2 ≤ x ≤ 0.8, preferably 0.3 ≤ x ≤ 0.7,
0.0001 ≤ y ≤ 0.2, preferably 0.005 ≤ y ≤ 0.1, and/or
0.01 ≤ z ≤ 1.0, preferably 0.05 ≤ z ≤ 0.7.

Moreover, it is possible that the at least one shell surrounding the core comprises or consists of a ZnS, ZnSe, ZnMgS, ZnSeTe and/or a ZnMnS semiconductor material.

For example, the quantum dot comprises at least two or exactly two shells, a first shell surrounding the core and a second shell adjacent to the first shell and surrounding the first shell.

In this preferred embodiment, it is further advantageous if the first shell comprises or consists of a ZnS nad/or ZnSe semiconductor material and the second shell comprises or consist of a ZnS, ZnMgS and/or ZnMnS semiconductor material, especially a combination of ZnSe/ZnS, ZnSe/ZnMgS, ZnSeTe/ZnMgS, or ZnSeTe/ZnMnS semiconductor materials, wherein the first mentioned semiconductor material constitutes the first shell and the latter mentioned semiconductor material constitutes the second shell.

Additionally, the semiconductor material comprised in the at least one shell additionally can comprise one more elements selected from the group consisting of Mg, Al, Ca, Ti, Cr, Mn, Fe, Co, Ni, Cu, Ga, Ge, Rb, Sr, Zr, Nb, Mo, Ru, Rh, Pd, Ag, In, Sn, Te, Ba, Bi, C, N, O, F, P, Cl, Br, and I.

The quantum dot according to the present invention can exhibit a diameter in between 3.0 and 30 nm, preferably in between 4.0 and 25 nm, and especially preferred in between 5.0 and 17 nm. The number average diameter can be measured by determining the diameter of a large number of individual quantum dots (e.g. 100 or more) with TEM spectroscopy and calculation of the average value from the individual values obtained.

For example, the core can have an number average diameter in between 2.0 and 10 nm, preferably in between 3.0 and 8.0 nm, especially preferred in between 4.0 and 6.0 nm. The number average diameter of the core can be determined in the same manner as described before by means of TEM spectroscopy.

Moreover, the shell adjacent to the core (1^{st} shell) can have a number average thickness in between 0.5 and 6.0 nm, preferably in between 1.2 and 4.0 nm, especially preferred in between 1.5 and 3.0 nm. The number average thickness of the 1^{st} shell can be determined by measuring the number average diameter of the particles obtained after coating the core with the 1^{st} shell by TEM spectroscopy as described before and subtraction of the value obtained for the number average diameter of the core.

Further it is possible that - in case of its presence - the second shell has a number average thickness in between 0.5 and 1.2 nm, preferably in between 1.2 and 4.0 nm, especially preferred in between 1.5 and 3.0 nm. The number average thickness of the 2^{nd} shell can be determined by measuring the number average diameter of the particles obtained after coating the core with the 2^{nd} shell (i.e. the quantum dot according to the invention) by TEM spectroscopy as described before and subtraction of the value obtained for the number average diameter of the core surrounded by the 1^{st} shell only.

The quantum dot according to the present invention can be additionally characterized by the following physical parameters:
- a peak wavelength in between 400 and 500 nm, preferably in between 420 and 480 nm, especially preferred in between 445 and 454 nm,
- a full width at half maximum (FWHM) in between 40 and 250 nm, preferably in between 45 and 220 nm and/or
- a quantum yield (QY) in between 10and 90 %, preferably in between 15 nd 85 %, especially preferred in between 20 and 80 %.

The quantum dot according to the present invention can exhibit an emission wavelength in between 400 and 850 nm, preferably in between 420 and 750 nm, especially preferred in between 430 and 700 nm.

According to a second aspect, the present invention is directed to a method of preparing a quantum dot as described in the foregoing, comprising the following steps:
- provision of a first solution comprising precursor materials for a core comprising or consisting of a Zn-Se-Te-X semiconductor material and reacting the precursor materials to form a dispersion comprising nanoparticles of the core, comprising or consisting of a Zn-Se-Te-X semiconductor material,
- provision of at least a second solution comprising first precursor materials for the respective at least one shell, addition of the at least one second solution to the dispersion comprising Zn-Se-Te-X nanoparticles of the core and reacting the precursor materials to form the at least one shell surrounding the core.

According to the present invention it is therefore possible to produce the inventive quantum dots in a one-pot synthesis.

In an advantageous embodiment, the inventive method comprises the following steps:
- provision of a first solution comprising first precursor materials for a core comprising or consisting of a Zn-Se-Te-X semiconductor material and reacting the first precursor materials to form a dispersion comprising nanoparticles of the core, comprising or consisting of a Zn-Se-Te-X semiconductor material,
- provision of a second solution comprising second precursor materials for the first shell surrounding the core, addition of the at least one second solution to the dispersion comprising nanoparticles of the core, comprising or consisting of a Zn-Se-Te-X semiconductor material and reacting the second precursor materials to form a dispersion comprising nanoparticles comprising nanoparticles of the core, comprising or consisting of a Zn-Se-Te-X semiconductor material, surrounded by a first shell,
- provision of a third solution comprising third precursor materials for the second shell surrounding the first shell, addition of the third solution to the dispersion obtained in the preceding step and reacting the third precursor materials to form a dispersion comprising nanoparticles comprising nanoparticles of the core, comprising or consisting of a Zn-Se-Te-X semiconductor material, surrounded by a first shell, further surrounded by a second shell.

According to a third aspect, the present invention is directed to an electronic device comprising quantum dots according to the present invention and described as in the foregoing.

Specifically, the electronic device according to the present invention can be selected from the group consisting of photoluminescent and electroluminescent devices, such as LEDs, displays, especially TV or computer displays.

For example, the present invention can be applied to lighting application and the large area high-resolution flat display taking a role of the white back light unit (WBLU). The inventive quantum dots can e.g. substitute conventional white OLEDs in respective devices. From the recent researches, QLED is available for solution process, Inkjet printing technology so printed BLU.

This quantum dots according to the present invention can e.g. be integrated in a single component white emitter.

The quantum dots according to the present invention are capable to absorb blue excitation light and emit white light and thus can be used in a white color conversion film which.

Specifically, white-emitting electroluminescent light emitting diodes can be fabricated with the quantum dots according to the present invention.

The present invention is illustrated by the following examples and specification without limiting the scope of the invention to the specifically provided details.

The inventors approached and generated the halide containing Zn-Se-Te-X (X+CI, Br,I) QD core covered with additional ZnSe and ZnS multi-shell to be able to emit wide range of white spectrum from 450 nm to 750 nm with high quantum yield. Technically advanced Zn-Se-Te-X/ZnSe/ZnS QD will be applied to cost-effective, feasible white light emitting material for lighting and display application.

### Reference Example

ZnSeTe/ZnSe/ZnS quantum dots without halide, indicating distinctive emission at 447 nm wavelength, are manufactured as follows.

| | |
|---|---|
| Step 1 (core): | 428 nm, 27 nm, 16 %, ZnSeTe |
| Step 2 (first shell): | 446 nm, 22 nm, 37 %, ZnSeTe/ZnSe |
| Step 3 (second shell): | 447 nm, 21 nm, 55 %, ZnSeTe/ZnSe/ZnS |

The numbers (e.g. for the core: 428 nm, 27 nm, 16%) state the peak wavelength, full width at half maximum (FWHM), and quantum yield (QY) of the QDs, respectively. The values are given for the respective quantum dot obtained after the respective step. This nomenclature is also used for the further examples.

In a first step (step 1), the core materials of 428 nm ZnSeTe is prepared according to the step 1 as follows.

1.1. 2 millimoles (mmol) of zinc acetate, 2 ml of oleic acid and 5 mL of 1-octadecene are put in a 50 ml 3-neck round flask reactor and heated at 150°C under vacuum for 3 hours. Then nitrogen is backfilled into the reactor and the temperature increased slowly to 300°C

1.2. Next a trioctylphosphine tellenide (TOP-Te, 0.04 mmol) and trioctylphosphine selenide (TOP-Se) is injected into the reactor at 300°C to synthesize a 428 nm ZnSeTe core material

1.3. 6 mmol of Zinc acetate, 12 mmol of oleic acid, and 6 ml of Trioctylamine are mixed in a 100ml round bottom flask and heated at 130°C under vacuum for 3 hours. 12 mmol of selenium and 6ml of Trioctylphosphine (TOP) are mixed in a 50ml round bottom flask and heated at 120°C under vacuum for 2 hours. Then the reactor is cooled down to room temperature to prepare a 0.4 M Zinc oleate stock solution and 2 M TOP-Se stock solution.

ZnSe shell is prepared according to the step 2 as follows,
2. The reactor is heated up to 300°C and introduced 10ml of 0.4M Zinc stock solution and 2ml of 2 M TOPSe stock solution at the same time. For the shell growth, the temperature of reactor is maintained at 300°C for 1 hour to synthesize a 446nm

ZnS shell is prepared according to the step 3 as follows

3. The reactor is heated up to 320°C and introduced 10ml of 0.4M Zinc stock solution and 2ml of 2M TOPS stock solution at the same time. For the shell growth, the temperature of reactor is maintained at 320°C for 20 min and the temperature lower down to 280°C and the temperature kept for 40 min and ZnSeTe/ZnSe/ZnS material

### Example 1-1

A ZnSeTeCI/ZnSe/ZnS quantum dots having a ZnCl₂ employed core with the molar ratio of Cl/Se = 0.2 is manufactured as follows.

| | |
|---|---|
| Step 1 (core): | 428 nm, 27 nm, 16 %, ZnSeTeCl |
| Step 2 (1^{st} shell): | 446 nm, 49 nm, 36 %, ZnSeTe/ZnSe |
| Step 3 (2^{nd} shell): | 447 nm, 45 nm, 55%, ZnSeTe/ZnSe/ZnS |

First, the core materials of 428 nm Zn-Se-Te-Cl according to the step 1 is prepared as follows.

1.1. 1 mmol of Zinc chloride and 2mL of ethanol are mixed in a 10 mL vial to prepare Zinc halide stock solution.

1.2. 2 millimoles of Zinc acetate, 2 ml of oleic acid and 5 mL of 1-octadecene are put in a 50 ml 3-neck round flask reactor and heated at 150°C under vacuum for 3 hours. Then nitrogen is backfilled into the reactor and the temperature increased slowly to 300°C

1.3. Next a trioctylphosphine tellenide (TOP-Te, 0.04 mmol) and trioctylphosphine selenide (TOP-Se) is injected into the reactor at 300°C to synthesize and the injection of 0.2 mL of Zinc chlroride stock solution was followsing and the reaction temperature kept at 300°C for 40 min to obtain a Zn-Se-Te-Cl core

1.4. 6mmol of Zinc acetate, 12mmol of oleic acid, and 6 ml of Trioctylamine are mixed in a 100ml round bottom flask and heated at 130°C under vacuum for 3 hours. 12mmol of selenium and 6ml of Trioctylphosphine are mixed in a 50ml round bottom flask and heated at 120°C under vacuum for 2 hours. Then the reactor is cooled down to room temperature to prepare a 0.4 M Zinc oleate stock solution and 2 M TOPSe stock solution.

ZnSe shell according to the step 2 is prepared as follows.

2. The reactor is heated up to 300°C and introduced 10ml of 0.4M Zinc stock solution and 2ml of 2 M TOPSe stock solution at the same time. For the shell growth, the temperature of reactor is maintained at 300°C for 1 hour to synthesize a 446nm Zn-Se-Te-CI/ZnSe

ZnS shell according to the step 3 is prepared as follows.

3. The reactor is heated up to 320°C and introduced 10ml of 0.4M Zinc stock solution and 2ml of 2M TOPS stock solution at the same time. For the shell growth, the temperature of reactor is maintained at 320°C for 20 min and the temperature lower down to 280°C and the temperature kept for 40 min to synthesize Zn-Se-Te-Cl/ZnSe/ZnS material

### Example 1-2

A ZnSeTeCl/ZnSe/ZnS quantum dots having a ZnCl₂ employed core with the molar ratio of Cl/Se = 0.3 is manufactured as follows.

| | |
|---|---|
| Step 1 (core): | 428 nm, 27 nm, 16 %, ZnSeTeCl |
| Step 2 (1^{st} shell): | 444 nm, 120 nm, 28 %, ZnSeTeCI/ZnSe |
| Step 3 (2^{nd} shell): | 448 nm, 108 nm, 34%, ZnSeTeCl/ZnSe/ZnS |

First, the core materials of 428 nm Zn-Se-Te-Cl according to the step 1 is prepared as follows.

1.1. 1 mmol of Zinc chloride and 2mL of ethanol are mixed in a 10 mL vial to prepare Zinc halide stock solution.

1.2. 2 millimoles of Zinc acetate, 2 ml of oleic acid and 5 mL of 1-octadecene are put in a 50 ml 3-neck round flask reactor and heated at 150°C under vacuum for 3 hours. Then nitrogen is backfilled into the reactor and the temperature increased slowly to 300°C

1.3. Next a trioctylphosphine tellenide (TOP-Te, 0.04 mmol) and trioctylphosphine selenide (TOP-Se) is injected into the reactor at 300°C to synthesize and the injection of 0.3 mL of Zinc chlroride stock solution was followsing and the reaction temperature kept at 300°C for 40 min to obtain a Zn-Se-Te-Cl core material

1.4. 6mmol of Zinc acetate, 12mmol of oleic acid, and 6 ml of Trioctylamine are mixed in a 100ml round bottom flask and heated at 130°C under vacuum for 3 hours. 12mmol of selenium and 6ml of Trioctylphosphine are mixed in a 50ml round bottom flask and heated at 120°C under vacuum for 2 hours. Then the reactor is cooled down to room temperature to prepare a 0.4 M Zinc oleate stock solution and 2 M TOPSe stock solution.

ZnSe shell according to the step 2 is prepared as follows.

2. The reactor is heated up to 300°C and introduced 10ml of 0.4M Zinc stock solution and 2ml of 2 M TOPSe stock solution at the same time. For the shell growth, the temperature of reactor is maintained at 300°C for 1 hour to synthesize a 446nm Zn-Se-Te-CI/ZnSe

ZnS shell according to the step 3 is prepared as follows.

3. The reactor is heated up to 320°C and introduced 10ml of 0.4M Zinc stock solution and 2ml of 2M TOPS stock solution at the same time. For the shell growth, the temperature of reactor is maintained at 320°C for 20 min and the temperature lower down to 280°C and the temperature kept for 40 min to synthesize Zn-Se-Te-Cl/ZnSe/ZnS material.

### Example 1-3

A ZnSeTeCl/ZnSe/ZnS quantum dots having a ZnCl₂ employed core with the molar ratio of Cl/Se = 0.5 is manufactured as follows.

| | |
|---|---|
| Step 1 (core): | 428 nm, 27 nm, 16 %, ZnSeTeCl |
| Step 2 (1^{st} shell): | 447 nm, 197nm, 42 %, ZnSeTeCI/ZnSe |
| Step 3 (2^{nd} shell): | 448 nm, 180nm, 60 %, ZnSeTeCl/ZnSe/ZnS |

First, the core materials of 428 nm Zn-Se-Te-Cl according to the step 1 is prepared as follows.

1.1. 1 mmol of Zinc chloride and 2mL of ethanol are mixed in a 10 mL vial to prepare Zinc halide stock solution.

1.2. 2 millimoles of Zinc acetate, 2 ml of oleic acid and 5 mL of 1-octadecene are put in a 50 ml 3-neck round flask reactor and heated at 150°C under vacuum for 3 hours. Then nitrogen is backfilled into the reactor and the temperature increased slowly to 300°C

1.3. Next a trioctylphosphine tellenide (TOP-Te, 0.04 mmol) and trioctylphosphine selenide (TOP-Se) is injected into the reactor at 300°C to synthesize and the injection of 0.5 mL of Zinc chlroride stock solution was followsing and the reaction temperature kept at 300°C for 40 min to obtain a Zn-Se-Te-Cl core material

1.4. 6mmol of Zinc acetate, 12mmol of oleic acid, and 6 ml of Trioctylamine are mixed in a 100ml round bottom flask and heated at 130°C under vacuum for 3 hours. 12mmol of selenium and 6ml of Trioctylphosphine are mixed in a 50ml round bottom flask and heated at 120°C under vacuum for 2 hours. Then the reactor is cooled down to room temperature to prepare a 0.4 M Zinc oleate stock solution and 2 M TOPSe stock solution.

ZnSe shell according to the step 2 is prepared as follows.

2. The reactor is heated up to 300°C and introduced 10ml of 0.4M Zinc stock solution and 2ml of 2 M TOPSe stock solution at the same time. For the shell growth, the temperature of reactor is maintained at 300°C for 1 hour to synthesize a 446nm Zn-Se-Te-CI/ZnSe

ZnS shell according to the step 3 is prepared as follows.

3. The reactor is heated up to 320°C and introduced 10ml of 0.4M Zinc stock solution and 2ml of 2M TOPS stock solution at the same time. For the shell growth, the temperature of reactor is maintained at 320°C for 20 min and the temperature lower down to 280°C and the temperature kept for 40 min to synthesize Zn-Se-Te-Cl/ZnSe/ZnS material.

### Example 1-4

A ZnSeTeCl/ZnSe/ZnS quantum dots having a ZnCl₂ employed core with the molar ratio of Cl/Se = 1.0 is manufactured as follows.

| | |
|---|---|
| Step 1 (core): | 428 nm, 27 nm, 16 %,ZnSeTeCl |
| Step 2 (1^{st} shell): | 447 nm, 192 nm, 46 % ZnSeTeCI/ZnSe |
| Step 3 (2^{nd} shell): | 448 nm, 188 nm, 87 %, ZnSeTeCl/ZnSe/ZnS |

First, the core materials of 428 nm Zn-Se-Te-Cl according to the step 1 is prepared as follows.

1.1. 1 mmol of Zinc chloride and 2mL of ethanol are mixed in a 10 mL vial to prepare Zinc halide stock solution.

1.2. 2 millimoles of Zinc acetate, 2 ml of oleic acid and 5 mL of 1-octadecene are put in a 50 ml 3-neck round flask reactor and heated at 150°C under vacuum for 3 hours. Then nitrogen is backfilled into the reactor and the temperature increased slowly to 300°C

1.3. Next a trioctylphosphine tellenide (TOP-Te, 0.04 mmol) and trioctylphosphine selenide (TOP-Se) is injected into the reactor at 300°C to synthesize and the injection of 1.0 mL of Zinc chlroride stock solution was followsing and the reaction temperature kept at 300°C for 40 min to obtain a Zn-Se-Te-Cl core material

1.4. 6mmol of Zinc acetate, 12mmol of oleic acid, and 6 ml of Trioctylamine are mixed in a 100ml round bottom flask and heated at 130°C under vacuum for 3 hours. 12mmol of selenium and 6ml of Trioctylphosphine are mixed in a 50ml round bottom flask and heated at 120°C under vacuum for 2 hours. Then the reactor is cooled down to room temperature to prepare a 0.4 M Zinc oleate stock solution and 2 M TOPSe stock solution.

ZnSe shell according to the step 2 is prepared as follows.

2. The reactor is heated up to 300°C and introduced 10ml of 0.4M Zinc stock solution and 2ml of 2 M TOPSe stock solution at the same time. For the shell growth, the temperature of reactor is maintained at 300°C for 1 hour to synthesize a 446nm Zn-Se-Te-CI/ZnSe

ZnS shell according to the step 3 is prepared as follows.

3. The reactor is heated up to 320°C and introduced 10ml of 0.4M Zinc stock solution and 2ml of 2M TOPS stock solution at the same time. For the shell growth, the temperature of reactor is maintained at 320°C for 20 min and the temperature lower down to 280°C and the temperature kept for 40 min to synthesize Zn-Se-Te-Cl/ZnSe/ZnS material

### Example 2-1

A ZnSeTeBr/ZnSe/ZnS quantum dots having a ZnBr₂ employed core with the molar ratio of Cl/Se = 0.5 is manufactured as follows.

| | |
|---|---|
| Step 1 (core): | 433 nm, 36nm, 15% ZnSeTeBr |
| Step 2 (1^{st} shell): | 447 nm, 235nm, 21% ZnSeTeBr/ZnSe |
| Step 3 (2^{nd} shell): | 449 nm, 220nm, 35% ZnSeTeBr/ZnSe/ZnS |

First, the core materials of 428 nm Zn-Se-Te-Br according to the step 1 is prepared as follows.

1.1. 1 mmol of Zinc Bromide and 2mL of ethanol are mixed in a 10 mL vial to prepare Zinc halide stock solution.

1.2. 2 millimoles of Zinc acetate, 2 ml of oleic acid and 5 mL of 1-octadecene are put in a 50 ml 3-neck round flask reactor and heated at 150°C under vacuum for 3 hours. Then nitrogen is backfilled into the reactor and the temperature increased slowly to 300°C

1.3. Next a trioctylphosphine tellenide (TOP-Te, 0.04 mmol) and trioctylphosphine selenide (TOP-Se) is injected into the reactor at 300°C to synthesize and the injection of 0.5 mL of Zinc bromide stock solution was followsing and the reaction temperature kept at 300°C for 40 min to obtain a Zn-Se-Te-Br core material

1.4. 6mmol of Zinc acetate, 12mmol of oleic acid, and 6 ml of Trioctylamine are mixed in a 100ml round bottom flask and heated at 130°C under vacuum for 3 hours. 12mmol of selenium and 6ml of Trioctylphosphine are mixed in a 50ml round bottom flask and heated at 120°C under vacuum for 2 hours. Then the reactor is cooled down to room temperature to prepare a 0.4 M Zinc oleate stock solution and 2 M TOPSe stock solution.

ZnSe shell according to the step 2 is prepared as follows.

2. The reactor is heated up to 300°C and introduced 10ml of 0.4M Zinc stock solution and 2ml of 2 M TOPSe stock solution at the same time. For the shell growth, the temperature of reactor is maintained at 300°C for 1 hour to synthesize a 446nm Zn-Se-Te-Br/ZnSe.

6. ZnS shell according to the step 3 is prepared as follows.

3. The reactor is heated up to 320°C and introduced 10ml of 0.4M Zinc stock solution and 2ml of 2M TOPS stock solution at the same time. For the shell growth, the temperature of reactor is maintained at 320°C for 20 min and the temperature lower down to 280°C and the temperature kept for 40 min to synthesize Zn-Se-Te-Br/ZnSe/ZnS material.

### Example 2-2

A ZnSeTel/ZnSe/ZnS quantum dots having a ZnCl₂ employed core with the molar ratio of Cl/Se = 0.5 is manufactured as follows.

| | |
|---|---|
| Step 1 (core): | 433 nm, 36nm, 15%, ZnSeTel |
| Step 2 (1^{st} shell): | 447 nm, 135nm, 37%, ZnSeTel/ZnSe |
| Step 3 (2^{nd} shell): | 448 nm, 104nm, 61 %, ZnSeTel/ZnSe/ZnS |

First, the core materials of 428 nm Zn-Se-Te-Br according to the step 1 is prepared as follows.

1.1. 1 mmol of Zinc Iodide and 2mL of ethanol are mixed in a 10 mL vial to prepare Zinc halide stock solution.

1.2. 2 millimoles of Zinc acetate, 2 ml of oleic acid and 5 mL of 1-octadecene are put in a 50 ml 3-neck round flask reactor and heated at 150°C under vacuum for 3 hours. Then nitrogen is backfilled into the reactor and the temperature increased slowly to 300°C

1.3. Next a trioctylphosphine tellenide (TOP-Te, 0.04 mmol) and trioctylphosphine selenide (TOP-Se) is injected into the reactor at 300°C to synthesize and the injection of 0.5 mL of Zinc Iodide stock solution was followsing and the reaction temperature kept at 300°C for 40 min to obtain a Zn-Se-Te-I core material

1.4. 6mmol of Zinc acetate, 12mmol of oleic acid, and 6 ml of Trioctylamine are mixed in a 100ml round bottom flask and heated at 130°C under vacuum for 3 hours. 12mmol of selenium and 6ml of Trioctylphosphine are mixed in a 50ml round bottom flask and heated at 120°C under vacuum for 2 hours. Then the reactor is cooled down to room temperature to prepare a 0.4 M Zinc oleate stock solution and 2 M TOPSe stock solution.

ZnSe shell according to the step 2 is prepared as follows.

2. The reactor is heated up to 300°C and introduced 10ml of 0.4M Zinc stock solution and 2ml of 2 M TOPSe stock solution at the same time. For the shell growth, the temperature of reactor is maintained at 300°C for 1 hour to synthesize a 446nm Zn-Se-Te-I/ZnSe

ZnS shell according to the step 3 is prepared as follows.

3. The reactor is heated up to 320°C and introduced 10ml of 0.4M Zinc stock solution and 2ml of 2M TOPS stock solution at the same time. For the shell growth, the temperature of reactor is maintained at 320°C for 20 min and the temperature lower down to 280°C and the temperature kept for 40 min to synthesize Zn-Se-Te-I/ZnSe/ZnS material.

As can be seen from the reference examples the optical properties of the QDs vary as the structure of the core (ZnSeTe) changes to core/shell (ZnSeTe/ZnSe) and core/shell/shell (ZnSeTe/ZnSe/ZnS) through the shelling process on the core.

When the ZnSe shell grows on the core, a redshift occurs due to a bandgap narrowing due to a size effect. FWHM decreased due to the better size distribution after the shelling. QY increases due to the surface passivation of QD, which brings the reduction of the surface defect.

The ZnS shell having a higher band gap passivates the surface of ZnSe and enhances the quantum confinement to the core. This results in higher QY with nearly slightly increased peak wavelength.

Table 1 summarizes he elemental analysis of Zn-Se-Te-Cl/ZnSe/ZnS quantum dots

**Table 1. ICP-OES data of Zn-Se-Te-Cl/ZnSe/ZnS quantum dots**

| | Structure | Cl/Se (Treated) | ICP-OES (Te/Se) | ICP-OES (Cl/Se) |
|---|---|---|---|---|
| Reference | ZnTeSe core (Te/Se = 0.02) | 0 | 0.020 | 0 |
| Example 1-1 | ZnTeSe core (Te/Se = 0.02) | 0.2 | 0.016 | 0.01 |
| Example 1-2 | ZnTeSe core (Te/Se = 0.02) | 0.3 | 0.015 | 0.02 |
| Example 1-3 | ZnTeSe core (Te/Se = 0.02) | 0.5 | 0.014 | 0.03 |
| Example 1-4 | ZnTeSe core (Te/Se = | 1 | 0.016 | 0.04 |

In table 2, the optical properties of the QDs produced in the examples according to the present invention and the reference example are summarized:

**Table 2. Optical properties of ZnSe, ZnSeTe/ ZnSe, and ZnTeSe/ZnSe/ZnS**

| | Core structure | Te/Se ratio | Zinc Halide (mmol) | Peak Wavelength (nm) | FWHM (nm) | QY (%) | CIE color coordinate (x,y) |
|---|---|---|---|---|---|---|---|
| Reference | ZnSeTe/ZnSe | 0.02 | 0 | 447 | 21 | 55 | (0,148, 0,054) |
| Example 1-1 | ZnSeTe-**Cl**/ZnSe | | 0.2 | 445 | 45 | 33 | (0,279, 0,281) |
| Example 1-2 | ZnSeTe-**Cl**/ZnSe | | 0.3 | 448 | 108 | 34 | (0,313, 0,321) |
| Example 1-3 | ZnSeTe-**Cl**/ZnSe | | 0,5 | 449 | 180 | 60 | (0,30, 0,32) |
| Example 1-4 | ZnSeTe-**Cl**/ZnSe | | 1 | 577 | 188 | 87 | (0,38, 0,41) |
| Example 2-1 | ZnSeTeBr/ZnSe | | 0.5 | 449 | 220 | 35 | (0,338, 0,357) |
| Example 2-2 | ZnSeTe-**I**/ZnSe | | 0.5 | 446 | 104 | 61 | (0,258, 0,291) |

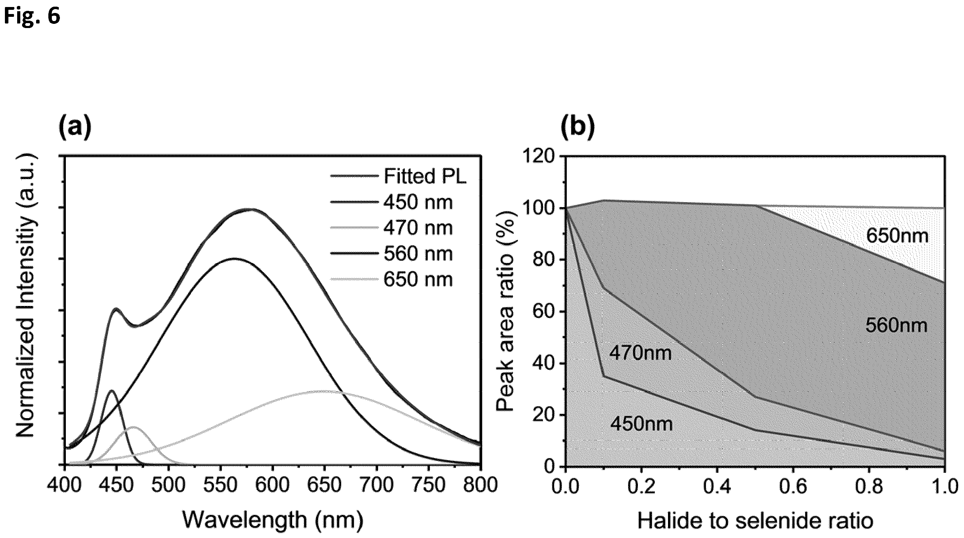

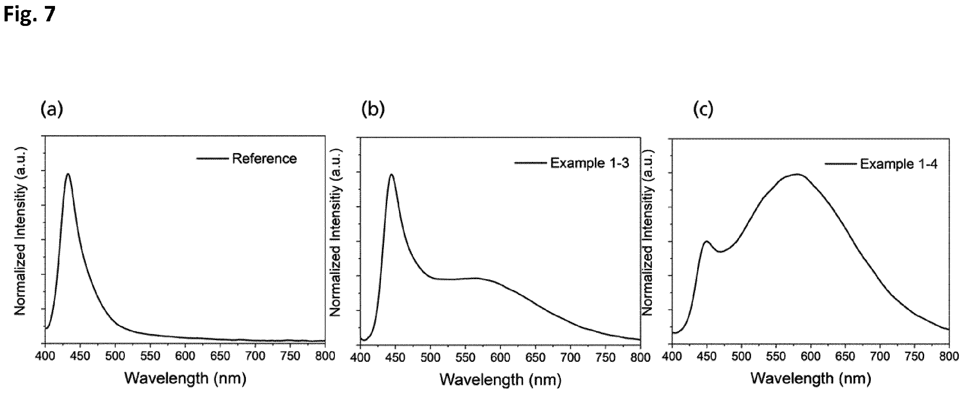

Emission spectra for Zn-Se-Te-X/ZnSe/ZnS quantum dots with identical Te/Se ratio (0.02) are shown in Figure 6 and Figure 7. The effect of contents of chloride on the emission spectrum Figure 7 (a) Cl/Se=0 (b) Cl/Se = 0.5 (c) Cl/Se=1.0.

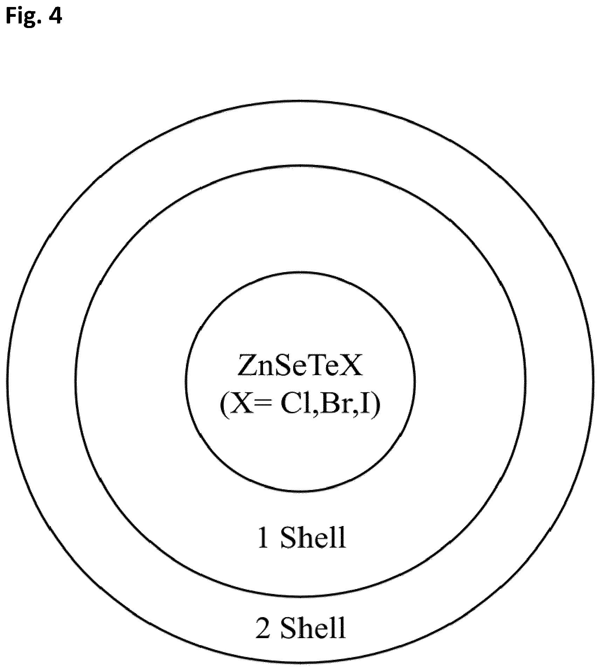

In Figure 4 the structure of halide containing Zn-Se-Te-X (X=Cl,Br,I) quantum dot is described. The quantum dot comprises a Zn-Se-Te-X (Cl,Br,I) core surrounded by a 1^{st} shell (inner shell) and a 2^{nd} shell (outer shell).

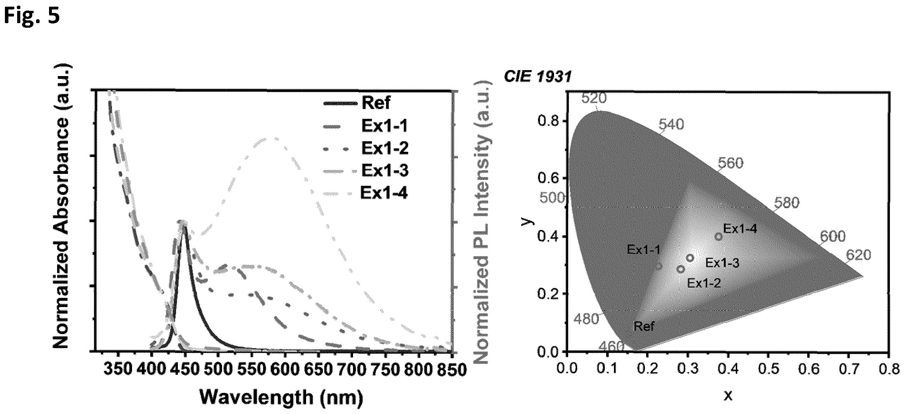

Surprisingly, the newly developed halide containing quantum dot comprising a Zn-Se-Te-X core results in the wide range of white emission by a broadening of emission peak as the amount of halide increase at the core, as depicted in Figure 5(a). Broader FWHM varies the CIE color coordinate of the emission spectrum. Thus, the optical properties are changed. This leads to a white emission spectrum. The broadening of FWHM indicates that the different emission peak arise at multiple peak wavelength, which turn the blue light to the white emission. Figure 5(a) shows the emission spectrum (solid) and absorbance (dotted line) of Zn-Se-Te-CI/ZnSe/ZnS with different Cl concentration of 0, 0.1, 0.5, 1.0 according to the Reference, Example 1-1, 1-2, 1-3 and 1-4. In Fig. 5(b) a CIE color coordinate graph for the quantum dot solution in toluene is shown. The emission spectrum and the color coordinates of QD solution is controllable by varying the halide concentration and the pure white emission can be attained close to the that of pure white (0.33, 0.33) as described at Figure 5(b).

Figure 6(a) displays the deconvolution of the emission spectrum of Example 1-4 showing that the emission spectrum of QDs are comprised of 4 different peaks at 450 nm, 470nm, 560nm, 650 nm. Figure (b) presents the graph of peak area ratio (A_{peak i}/A_{peak440 nm}+ A_{peak460 nm}+A_{peak560 nm}+A_{peak650 nm}, i = 440 nm, 460 nm, 560 nm, 650 nm) of ZnTeSeX/ZnSe/ZnS with different concentration of halide (Cl/Se = 0, 0.1, 0.5, 1.0) in the Zn-Te-Se-X core, according to Reference, Example1, Example 1-2, Example 1-3.

Figure 7 shows the emission spectrum of ZnSeTeCI/ZnSe/ZnS quantum dot with the different concentration of chloride in the core. (a) pure ZnSeTe_{0.02} prepared for reference (b) ZnSeTeCl_{0.5} prepared in Example 1-3 (c) ZnSeTeCl_{1.0} prapered in Example 1-4. As can be seen, with the examples according to the invention a red-shift as well as a broadening of the emission spectrum (spectra (b) and (c)) compared with the quantum dot according to the prior art (spectrum (a)) is possible, leading to an quasi-continuous emission spectrum an hence an emission of white light.

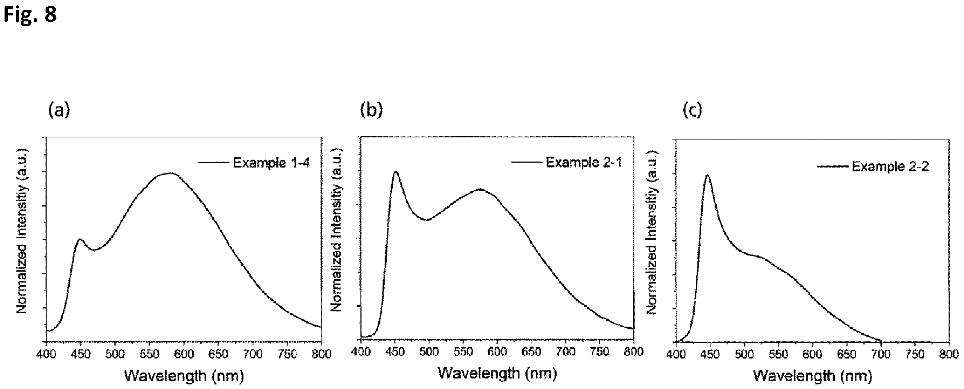

Figure 8 shows the emission spectrum of Zn-Se-Te-X/ZnSe/ZnS quantum dot with different types of halides in the core. (a) ZnSeTeCl_{0.5} prepared for reference (b) Zn-Se-Te-Br_{0.5} prepared in Example 1-3 (c) ZnSeTel_{0.5} prepared in Example 1-4.

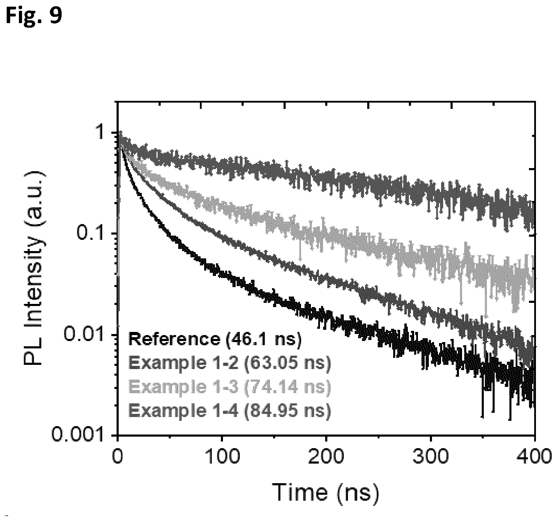

Figure 9 shows time resolved photoluminescence (TRPL) spectra and the average lifetime τ̅ of Zn-Te-Se-CI/ZnSe/ZnS (Cl/Se = 0, .1, 0.5, and 1) according to reference, Example 1-1, 1-2, 1-3, and 1-4.

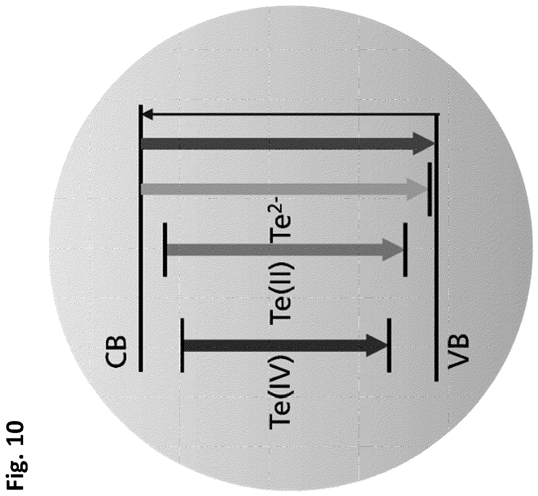

Figure 10 shows the scheme of the band diagram of Zn-Te-Se-X (X=CI, Br, I)/ZnSe/ZnS quantum dots.

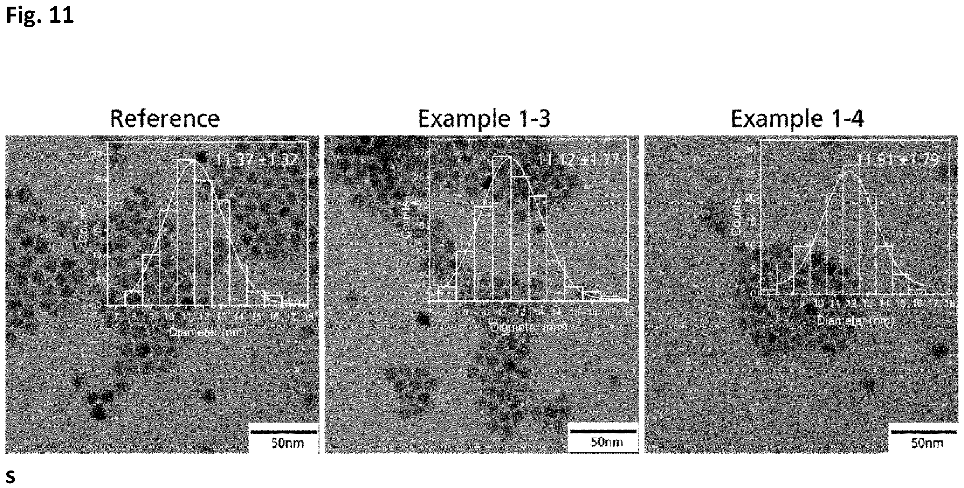

Figure 11 shows a TEM image of ZnSeTe_{0.02}/ZnSe/ZnS, ZnSeTe_{0.02}Cl/ZnSe/ZnS (Cl/Se = 0.5), and ZnSeTe_{0.02}Cl/ZnSe/ZnS (Cl/Se = 1) according to Reference, Example 1-3 and Example 1-4.

The research that led to these results was funded by the European Union.

## Claims

1. Quantum dot with a core-shell structure, comprising a core and at least one shell surrounding the core, **characterized in that** the core comprises or consists of a Zn-Se-Te-X semiconductor material, wherein X denotes Cl, Br, I or a combination thereof.

2. Quantum dot according to claim 1, **characterized in that** the Zn-Se-Te-X semiconductor material has a molar ratio of Te to Se from 0.001 to 0.150, preferably from 0.005 to 0.125, especially preferred from 0.010 to 0.100.

3. Quantum dot according to one of the preceding claims, **characterized in that** the Zn-Se-Te-X semiconductor material has a molar ratio of X to Se from 0.001 to 1.000, preferably from 0.005 to 0.800, especially preferred from 0.075 to 0.500.

4. Quantum dot according to one of the preceding claims, **characterized in that** the Zn-Se-Te-X semiconductor material has a molar ratio of Zn to X from 0.01 to 3.0, preferably from 0.05 to 2.0, especially preferred from 0.1 to 1.2.

5. Quantum dot according to one of the preceding claims, **characterized in that** the Zn-Se-Te-X semiconductor material is selected from the group consisting of Zn-Se-Te-Cl, Zn-Se-Te-Br, Zn-Se-Te-I or a combination thereof.

6. Quantum dot according to one of the preceding claims, **characterized in that** the Zn-Se-Te-X semiconductor material has the following composition: Zn_{w}SeₓTe_{y}X_{z} wherein
0.2 ≤ w ≤ 0.8, preferably 0.3 ≤ w ≤ 0.7,
0.2 ≤ x ≤ 0.8, preferably 0.3 ≤ x ≤ 0.7,
0.0001 ≤ y ≤ 0.2, preferably 0.005 ≤ y ≤ 0.1, and/or
0.01 ≤ z ≤ 1.0, preferably 0.05 ≤ z ≤ 0.7.

7. Quantum dot according to one of the preceding claims, **characterized in that** the at least one shell surrounding the core comprises or consists of a ZnS, ZnSe, ZnMgS, ZnSeTe and/or a ZnMnS semiconductor material.

8. Quantum dot according to one of the preceding claims, **characterized in that** the quantum dot comprises at least two or exactly two shells, a first shell surrounding the core and a second shell adjacent to the first shell and surrounding the first shell.

9. Quantum dot according the preceding claim, **characterized in that** the first shell comprises or consists of a ZnS and/or ZnSe semiconductor material and the second shell comprises or consist of a ZnS, ZnMgS and/or ZnMnS semiconductor material, especially a combination of ZnSe/ZnS, ZnSe/ZnMgS, ZnSeTe/ZnMgS, or ZnSeTe/ZnMnS semiconductor materials, wherein the first mentioned semiconductor material constitutes the first shell and the latter mentioned semiconductor material constitutes the second shell.

10. Quantum dot according to the preceding claim, **characterized in that** the semiconductor material comprised in the at least one shell additionally comprises one more elements selected from the group consisting of Mg, Al, Ca, Ti, Cr, Mn, Fe, Co, Ni, Cu, Ga, Ge, Rb, Sr, Zr, Nb, Mo, Ru, Rh, Pd, Ag, In, Sn, Te, Ba, Bi, C, N, O, F, P, Cl, Br, and I.

11. Quantum dot according to one of the preceding claims, **characterized by** a number average diameter in between 3.0 and 30 nm, preferably in between 4.0 and 25 nm, especially preferred in between 5.0 and 17 nm.

12. Quantum dot according to one of the preceding claims, **characterized in that** the core has a number average diameter in between 2.0 and 10 nm, preferably in between 3.0 and 8.0 nm, especially preferred in between 4.0 and 6.0 nm.

13. Quantum dot according to one of the preceding claims, **characterized in that** the shell adjacent to the core has a number average thickness in between 0.5 and 6.0 nm, preferably in between 1.2 and 4.0 nm, especially preferred in between 1.5 and 3.0 nm.

14. Quantum dot according to one of the claims 8 to 13, **characterized in that** the second shell has a number average thickness in between 0.5 and 1.2 nm, preferably in between 1.2 and 4.0 nm, especially preferred in between 1.5 and 3.0 nm.

15. Quantum dot according to one of the preceding claims, **characterized by** a peak wavelength in between 400 and 500 nm, preferably in between 420 and 480 nm, especially preferred in between 445 and 454 nm.

16. Quantum dot according to one of the preceding claims, **characterized by** a full width at half maximum (FWHM) in between 40 and 250 nm, preferably in between 45 and 220 nm.

17. Quantum dot according to one of the preceding claims, **characterized by** a a quantum yield (QY) in between 10 and 90 %, preferably in between 15 and 85 %, especially preferred in between 20 and 80 %.

18. Quantum dot according to one of the preceding claims, **characterized by** an emission wavelength in between 400 and 850 nm, preferably in between 420 and 750 nm, especially preferred in between 430 and 700 nm.

19. Method of preparing a quantum dot according to one of the preceding claims, comprising the following steps:
• provision of a first solution comprising precursor materials for a core comprising or consisting of a Zn-Se-Te-X semiconductor material and reacting the precursor materials to form a dispersion comprising nanoparticles of the core, comprising or consisting of a Zn-Se-Te-X semiconductor material,
• provision of at least a second solution comprising first precursor materials for the respective at least one shell, addition of the at least one second solution to the dispersion comprising Zn-Se-Te-X nanoparticles of the core and reacting the precursor materials to form the at least one shell surrounding the core.

20. Method according to the preceding claim, comprising the following steps:
• provision of a first solution comprising first precursor materials for a core comprising or consisting of a Zn-Se-Te-X semiconductor material and reacting the first precursor materials to form a dispersion comprising nanoparticles of the core, comprising or consisting of a Zn-Se-Te-X semiconductor material,
• provision of a second solution comprising second precursor materials for the first shell surrounding the core, addition of the at least one second solution to the dispersion comprising nanoparticles of the core, comprising or consisting of a Zn-Se-Te-X semiconductor material and reacting the second precursor materials to form a dispersion comprising nanoparticles comprising nanoparticles of the core, comprising or consisting of a Zn-Se-Te-X semiconductor material, surrounded by a first shell,
• provision of a third solution comprising third precursor materials for the second shell surrounding the first shell, addition of the third solution to the dispersion obtained in the preceding step and reacting the third precursor materials to form a dispersion comprising nanoparticles comprising nanoparticles of the core, comprising or consisting of a Zn-Se-Te-X semiconductor material, surrounded by a first shell, further surrounded by a second shell.

21. Electronic device comprising quantum dots according to one of the claims 1 to 18.

22. Electronic device according to the preceding claim selected from the group consisting of photoluminescent and electroluminescent devices, such as LEDs, displays, especially TV or computer displays.
